# EUROPEAN PATENT SPECIFICATION

(11) **EP 0 506 139 B1**
(45) Date of publication and mention of the grant of the patent: **02.08.1995**
(21) Application number: 92105483.9
(22) Date of filing: 30.03.1992
(51) Int. Cl.: C05F 3/00, C05F 17/00, C05F 9/00

(54) **Method for manufacturing of organic fertilizers**
Verfahren zur Herstellung von organischen Düngemitteln
Procédé de fabrication d'engrais organiques

(30) Priority: 28.03.1991 JP 90057/91
(43) Date of publication of application: 30.09.1992
(73) Proprietor: INOUE, Satoshi, Naka-gun, Kanagawa 255 (JP)
(72) Inventor: INOUE, Satoshi, Naka-gun, Kanagawa 255 (JP)
(74) Representative: DIEHL GLAESER HILTL & PARTNER

(56) References cited:
- EP-A- 0 445 102
- WO-A-80/01803
- FR-A- 2 156 888

## Description

The present invention relates to an improvement of a method for manufacturing of organic fertilizers by artificial treatments of livestock excrements, such as swine-, chicken-, and cattle-manures, sewage disposal sludge, such as living draining sludge or mixture of said wastes with cellulose-containing organic materials such as grasses, hulls, straws, woodchips, etc. into organic fertilizers without bad odor within a short time.

An enormous quantity of excrements exhausted from the large-scale livestock industry are left due to lack of appropriate treating methods, and environmental pollution caused by bad odor and discharge thereof without treatment has created a social problem. In general, it requires 5 to 6 months to compost excrements of chicken, cattle, swine, etc., and cellulose-containing coarse organic materials used as beds thereof, such as grasses, straws, hulls, wood chips etc., by leaving them as such in the nature. This is very inefficient and generates bad odor during that period. It has also been difficult to obtain evenly fermented compost of good quality because of unevenness in fermentation of the surface and interior parts.

In order to solve the above mentioned problem, an inventor of this invention proposed a method for manufacturing of organic fertilizers, which comprises adjusting the moisture content, to a range of 45 to 65 weight%, of a waste containing organic materials or a mixture of said waste with cellulose-containing organic materials, shearing and kneading them under an elevated pressure at a temperature elevated to 40°C to 90°C by pressurization and friction, releasing them from the state of elvated pressure, followed by pulverizing the thus-treated mixture while contacting it with air. He also proposed a device suitable to carry out the method (International Patent Publication No. WO92/00259).

Although this method has succeeded in manufacturing of a high quality compost for a short time of period, it takes a long time to reach the desired temperature in spite of the rise of temperature by the heat of compression and the heat of friction by mixing friction in a treatment tank, and unstable conditions continue in manufacturing an organic fertilizer by this method. Also during this period there is some fear of a bad odor caused by psychrophilic microorganisms and the like which are unfavorable to manufacturing compost. Besides, various kinds of raw materials are used in this method, and moreover the change of the raw materials is enormous. Therefore, it takes some time to stabilize the conditions such as temperature and so forth which are optimal for the activities of microorganisms, and it happens that there are difficulties to maintain a stable operation in case that the raw materials are changed.

Then, as a result of a study on an improved method of the above mentioned invention in order to operate steadily in a short time, the inventor found that the desired temperature can be reached in a short time, it becomes possible to operate very stably, and a bad odor can be suppressed. Consequently a good quality of compost can be produced by recycling a part of the processed mixture discharged from the treatment tank and left under a specific condition for further fermentation, to the treatment tank for recycling-treatment mixed with fresh raw materials, and finally completed this invention.

The present invention is an improvement of the method for manufacturing of organic fertilizers previouly proposed by the inventor. The invention refers to a method for manufacturing of organic fertilizers, with adjusting the moisture content of a waste containing organic materials or of a mixture of said waste with cellulose-containing organic materials to a range of 45 to 65 weight%, shearing and kneading the waste or the mixture in a primary treatment tank under an elevated pressure at a temperature elevated to 40 to 90°C by pressurization and friction, releasing the state of elevated pressure, followed by pulverizing the thus-treated mixture in a secondary treatment tank while contacting it with air, characterized by recycling a part of the processed mixture discharged from the secondary treatment tank and left in a fermentation box under the conditions of fermentation by thermophilic microorganisms at a temperature of higher than 40 °C for more than 5 hours after discharging, to the primary treatment tank and treating it there mixed with fresh raw materials, the recycled amount of processed mixture being 5 to 60 weight% of the total amount of the manufactured product.

The improvement according to the present invention comprises the recycling of a part of the processed mixture discharged from the secondary treatment tank and left under the conditions of fermentation by thermophilic microorganisms at a temperature of higher than 40°C for more than 5 hours after discharging, to the treatment tank and treating it there mixed with fresh raw materials, the recycled amount of said processed mixture being 5 to 60 weight % of the total amount of manufactured product.

As a waste containing organic material which can be the raw material of this invention, livestock excrements such as cattle manures, chiken manures, swine manures, sewage disposal sludge, living draining sludge, food industry drainage, sewage sludge such as livestock excrements sludge, wet garbage, and algae, the aquatic plants such as sea weeds, can be mentioned as being preferred, but especially, the livestock excrements, the sewage sludge and a wet garbage are preferred. These can be used alone or can be mixed with cellulose-containing organic materials. As the cellulose-containing organic materials, grasses, straw, hull, wood chips, bark and so on can be used favorably.

In order to ensure an accelerated fermentation and a better result there is adjusted the pH of the mixture with a pH-adjusting agent so that the pH value during the fermentation process is in a range of pH 6 to 9 as well as adjusted the moisture content of the mixture of livestock excrements and cellulose-containing organic materials, such as grasses, straws, hulls, woodchips, etc., to 45 to 65%. The pH-adjusted mixture is sheared and kneaded under elevated pressure, and the temperature thereof is increased to 40 to 90°C by compression and friction caused by kneading. Then the treated mixture is released from the compressed state with exposition to air.

In this invention, an organic fertilizer is produced by the fermentation by microorganism, and as the microorganism, thermophilic and aerobic microorganisms are favorable. The fermentation by psychrophilic microorganisms, mesophilic microorganisms or anaerobic microorganisms generates a bad odor, and also in case that these microorganisms exist in the product, rotting or other undesirable phenomena take place such as the generation of substances harmful to plants due to the secondary fermentation.

Optimum temperature ranges for microbial activities are 50 to 70°C for thermophilic microorganisms, 30 to 40°C for mesophilic microorganisms, and 10 to 20°C for psychrophilic microorganisms. At a temperature exceeding these temperature range by 15 to 20°C, their growth is hindered, however, their spores are often dormant without being destroyed at such high temperatures. Therefore, even if the process of manufacture is conducted at a high temperature, when moderate moisture is present, the temperature is lowered and the ventilation of air is stopped after packing the product, the psychrophilic microorganisms, mesophilic microorganisms, or anaerobic microorganisms are activated, and there is the fear that the secondary damage may occur.

According to the present invention, psychrophilic microorganisms and mesophilic microorganisms can be destroyed by shearing and kneading of the raw materials under elevated pressure by dint of pressurization and friction.

That is to say, in the present invention the temperature of the raw materials is elevated to 40 to 90°C by means of mechanical compression and kneading, and by means of the elevated pressure hot water can penetrate into the inner portion of the raw materials, and psychrophilic microorganisms and mesophilic microorganisms are destroyed as the result of the destruction of their spores due to penetration of hot water and friction. Accordingly, aerobic and thermophilic microorganisms are activated by physical and thermal stimulations, and cellulose-containing organic materials are crushed into small fragments by the compression and kneading. Therefore, livestock excrements, and so on, which are main nutrients for microorganisms, are evenly distributed. Thus the microorganisms are activated in surroundings where the conditions for growth, such as temperature, moisture, etc., are even. Therefore all microorganisms start their activities simultaneously and ferment the raw materials within a short time. In such a case, thermophilic microorganisms propagate quickly in the primary treatment tank and the number of psychrophilic microorganisms almost disappear. In the secondary treatment tank, aerobic microorganisms propagate abruptly since the treated material has been released from the compressed state and has been pulverised. Accordingly the number of anaerobic microorganisms decrease relatively.

Thus, thermophilic microorganisms and aerobic microorganisms, which are useful for fermentation, are activated and propagate quickly, and since psychrophilic microorganisms and anaerobic microorganisms which cause bad odor decrease, by shearing and kneading of the raw materials under an elevated pressure and by pulverizing them while contacting them with air. Composts of good quality and without bad odor can be manufactured within a short time.

Therefore, in the present invention the temperature of the primary treatment tank is maintained at 40 to 90°C, preferably at 50 to 70°C. In the primary treatment tank, the temperature is elevated and maintained at said range by pressurization and kneading, as the raw materials are sheared and kneaded under elevated pressure there.

The range of the optimum pH value for the propagation of important microorganisms for the fermentation, such as cellulose-decomposing microorganisms, is 6 to 9, preferably 7 to 8. The value of pH of raw materials can be too low due to production of organic acids during the fermentation, and the pH value can be too high due to the presence of excess ammonia, and both cause a delay in the fermentation. This problem can be resolved by adjusting the pH prior to the addition of a pH-adjusting agent in order to bring the pH value during fermentation within the range of pH 6 to 9. Besides, the fertilizing ability of the products can be improved by the use of a pH-adjusting agent which is a fertilizer as well.

As such a pH-adjusting agent, ammonia or calcium-containing compounds which can be applied as fertilizer too, such as calcium silicate, lime nitrogen, quick lime, slaked lime, calcium carbonate, magnesia lime and magnesia quick lime can be used when the pH is too low, and phosphorus fertilizer such as liquid phosphoric acid, super phosphate of lime and triple super phosphate of lime can be used when the pH is too high. The pH-adjusting agent can be added simultaneously with or after the adjusting of the moisture content.

In this invention, the recycling of a part of the processed mixture constitutes a characteristic feature thereof. That is, a part of the processed mixture (hereafter called "recycled raw materials") which is discharged from the secondary treatment tank and left further under the conditions of fermentation by thermophilic microorganisms at a temperature of higher than 40°C for more than 5 hours after having been discharged from the secondary treatment tank is returned to the primary treatment tank to mix it with fresh raw materials.

The recycled raw materials are kneaded at a high temperature and under compression in the primary treatment tank, and then the thermophilic and aerobic microorganisms which are beneficial for the fermentation proliferate rapidly. After being discharged from the primary treatment tank under these conditions, the fermentation proceeds under a suitable surrounding where an organic fertilizer is produced and cellulose is decomposed by thermophilic microorganisms at a temperature of higher than 40°C for more than 5 hours. A stable reaction starts from the beginning by recycling a part of it and mixing it with fresh raw materials. Namely, the recycling makes the fermentation in the primary treatment tank constant by the repetition of kneading under high pressure and at high temperature (physical stimulus), crushing and oxidation. Consequently, the microorganisms useful for this fermentation are screened. Moreover, the screening indicates the microorganisms, which have a vigorous activity and proliferate rapidly, and thus have a function to suppress the different kinds of microorganisms existing in the fresh raw materials, and afterwards the fermentation is constantly stabilized quickly and shows the same pattern. Without recycling, the conditions fluctuate widely according to the outdoor temperature. When the outdoor temperature is low, heating means such as hot air are required in order to maintain a stable operation, but in case of the recycling operation, there is little fluctuation caused by the outdoor temperature. Moreover since a bad odor derived from raw materials is easily decomposed by the function of the endo-enzyme and/or exo-enzyme of microbial cells contained in the recycled raw materials, this has a great effect to suppress the generation of a bad odor.

As the recycled raw material there is used a processed mixture discharged from the secondary treating tank and left under the conditions of fermentation by thermophilic microorganisms at the temperature of higher than 40°C, preferably higher than 50°C, for more than 5 hours, preferably for more than 24 hours, after being discharged from the secondary treatment tank. In a discharged processed mixture left as it is, or left under a condition being below said range of temperature or time, the fermentation by thermophilic microorganisms is insufficient, so they are not suitable as a recycled raw material to stabilize the operation. A product left for a longer time can be used as recycled raw materials, but the product wherein the fermentation is completed and the temperature of which is below 30°C is not preferred, because the effect of recycling is small.

The recycled amount of processed mixture is 5 to 60 weight % of the total amount of manufactured product, 10 to 30 weight% being preferred.

With a recycled amount of less than 5 weight%, the recycling effect is not sufficient. When more than 60% is recycled, the effect is not so much increased, and an operation with such a large amount of recycled product is not economical as the energy consumption required for recycling is increased.

This invention comprises two process parts, the one of which being the shearing and kneading of the raw material mixture of organic fertilizers under an elevated pressure at the temperature elevated to 40 to 90°C by pressurization and friction, and the other being the releasing the state of elevated pressure and pulverizing the thus-treated mixture while contacting it with air.

The device which operates the process of this invention comprises a primary treatment tank, a secondary treatment tank and a fermentation box for further fermentation to convert the discharged product from the secondary treating tank into the product and the recycled raw materials.

In the device the front end of a cylindrical primary treatment tank having a hopper for feeding raw materials is connected to the rear end of a cylindrical secondary treatment tank which is equipped with an outlet at the front end, through an open/close gate.

The primary treatment tank is equipped with a screw conveyor for compression and transportation and with a system for shearing and kneading inside. The secondary treatment tank is equipped with rotary blades for crushing, and at the rear end thereof, is equipped with a blower.

Thus, the raw materials can be treated and taken out as a processed mixture after a single treatment by a series of devices.

An outline of the device for practising the present invention is explained below with the attached drawings.

Fig. 1 is a plan view of the device for manufacturing of organic fertilizer of the present invention.

Fig. 2 is a cross section along the line II - II in Fig.1.

Fig. 3 is a cross section along the line III - III in Fig. 1.

Fig. 4 is a right-side elevation view of Fig. 1.

Fig. 5 is a sketch of a fermentation box.

Fig. 6 is a diagram showing the relation between time and temperature of the outlet in the process of the present invention and of another process without recycling the raw materials. The reference numerals have the meanings as stated below.

1: Primary treatment tank. 1': cylinder. 2: Secondary treatment tank. 2': cylinder. 3: Open/close gate. 4: Hopper. 4a: Hopper for fresh raw materials. 4b: Hopper for recycling materials. 5: Opening. 6: Driving system. 7: Screw conveyor. 7a: Primary screw. 7b: Secondary screw. 8: Shearing/kneading system. 8a: Rotary blades. 8b: Fixed blades. 9: Entrance. 10: Outlet. 11: Rotary pulverizing blades. 12: Blower. 13: Motor. 14: Opening for air. 15: Raw materials. 16: Processed mixture. 17: Fermentation box. 18: Side plate. 19: Bottom plate.

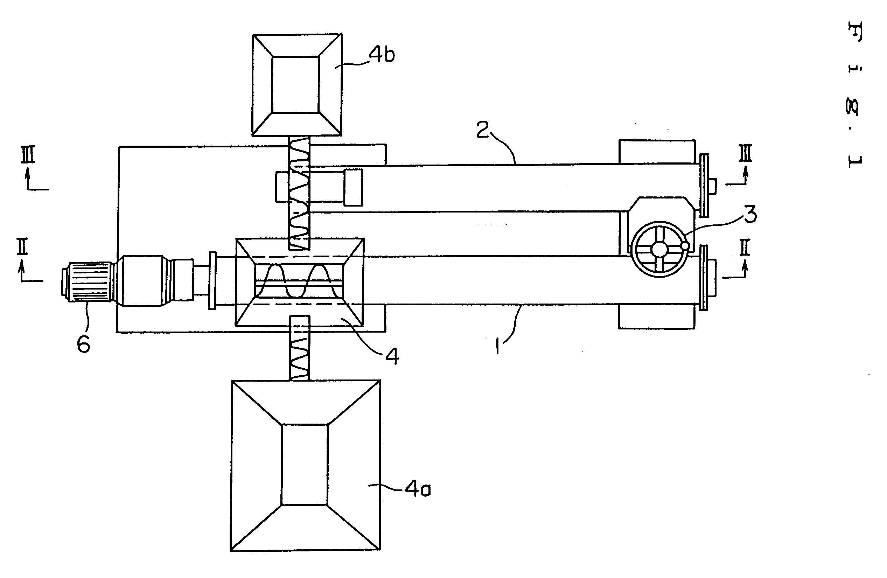

As shown in Fig. 1 and Fig. 3, the device for manufacturing organic fertilizers consists of a cylindrical primary treatment tank 1, and a cylindrical secondary treatment tank 2 connected through an open/close gate 3.

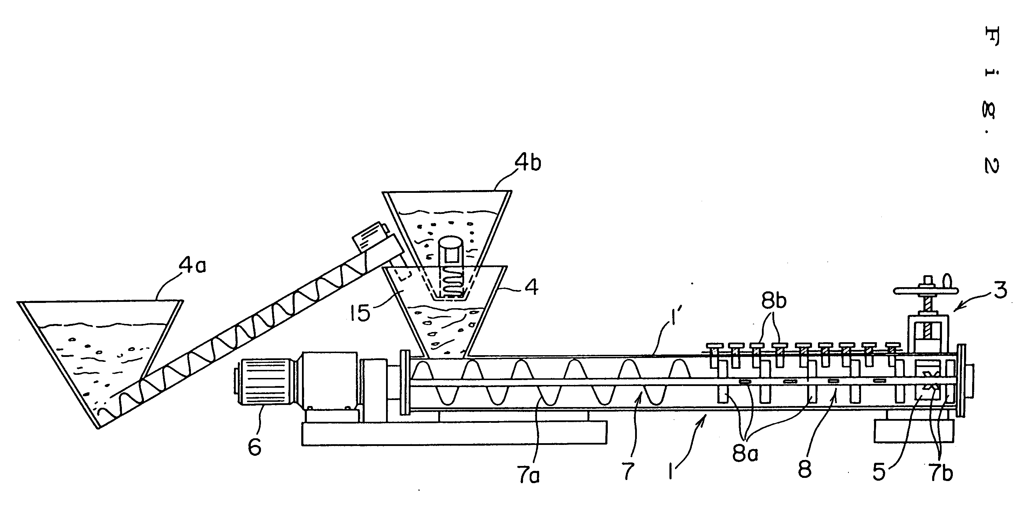

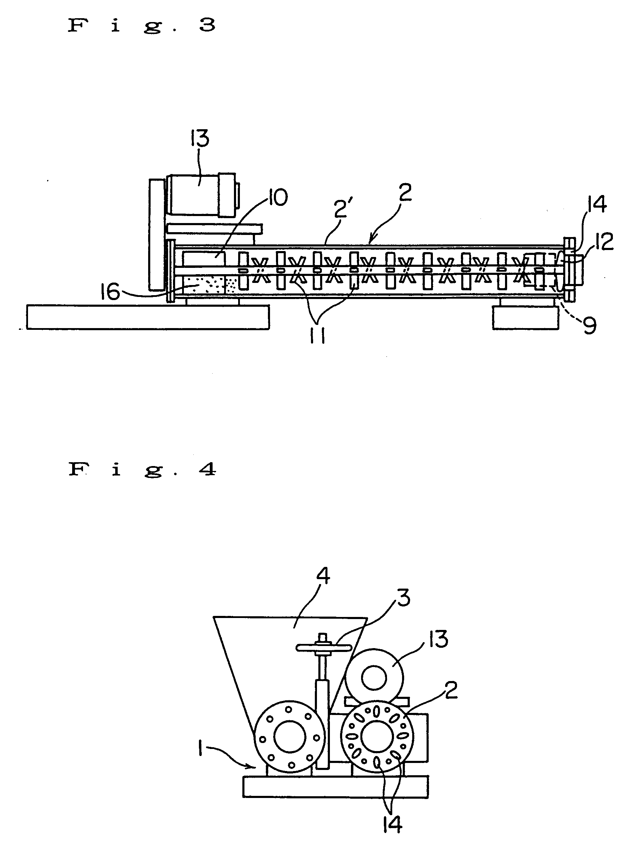

As shown in Fig. 1, Fig. 2 and Fig. 4, the primary treatment tank is composed of cylinder 1' which is equipped with a hopper 4 for the input of raw materials on the one end and with an opening 5 connected to an open/close gate 3. Within the cylinder 1' a screw conveyor 7 driven by a motor or a similar driving system 6 and a shearing/kneading system 8 are present.

The fresh raw materials and the recycled raw materials are fed from a feeding hopper 4a of the fresh raw materials and from a feeeding hopper 4b of the recycled raw materials, respectively, as well as transported to the primary treatment tank 1 through the hopper 4 and mixed homogeneously there.

As the screw conveyor 7 transports while compressing the raw materials fed to the hopper 4 toward the open/close gate 3, it is desirable to provide a secondary screw 7b which rotates in the reverse direction to that of the primary screw 7a. This secondary screw is provided close to the opening 5 of the primary treatment tank, facing the primary screw 7a, so that there is a further compressing the raw materials having been transported and compressed by the primary screw 7a.

The shearing kneading system 8 is equipped next to the primary screw 7a, in other words, between the primary screw 7a and the secondary screw 7b.

The shearing/kneading system 8 consists of a plurality of blades, which is rotated by a driving system such as a motor, and fixed blades 8b are projecting into the primary treatment tank, corresponding to the rotary blades 8a.

The fixed blades 8b promote shearing of the raw materials by means of grinding with the rotary blades 8a and they prevent co-rotating of the raw materials with the rotary blades 8a, and also act as baffle boards for a compressed transportation of the raw materials. The fixed blades are therefore preferably equipped in the primary treatment tank with a screw driving system or a similar device, so that the fixed blades 8b can be driven forward and backward, which enables to control the temperature, caused by compression and friction, by adjusting the height of the fixed blades 8b.

As shown in Fig. 1, Fig. 3 and Fig. 4, the secondary treatment tank 2 consists of a cylindrical tank 2' which has an entrance 9, connected to the aforesaid open/close gate 3, on one end, and an outlet (opening for taking out the products) 10 on the other end. Within the cylinder 2', rotary pulverizing blades 11 are provided which drive the treated materials toward the outlet 10 while pulverizing the treated materials. A blower 12 for taking air into the cylinder is provided on the side of the entrance 9.

In the drawings shown as an example, both the rotary pulverizing blades 11 and the blower 12 are on the same rotary shaft driven by a motor 13. In the drawings, there is shown an opening 14 for air intake for the blower 12.

A few fermentation boxes 17 which stock the discharged product from outlet 10 are used to further proceed fermentation and to make a part of the product to recyled raw materials, are arranged near the outlet.

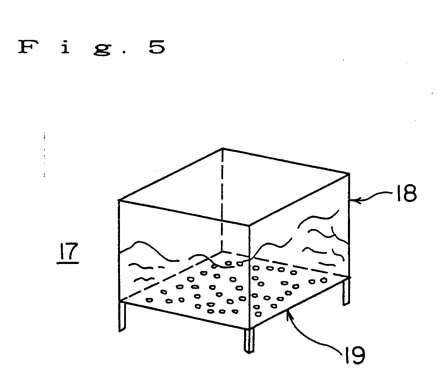

The fermentation box 17 has the structure according to Fig. 5 and comprises side plates 18 and a bottom plate 19. The upper part is open. The bottom plate is a steel plate having fine holes. When the treated producted is charged, the activity of aerobic microorganisms is maintained as air flows from the bottom by the natural convection caused by holding the heat of the content.

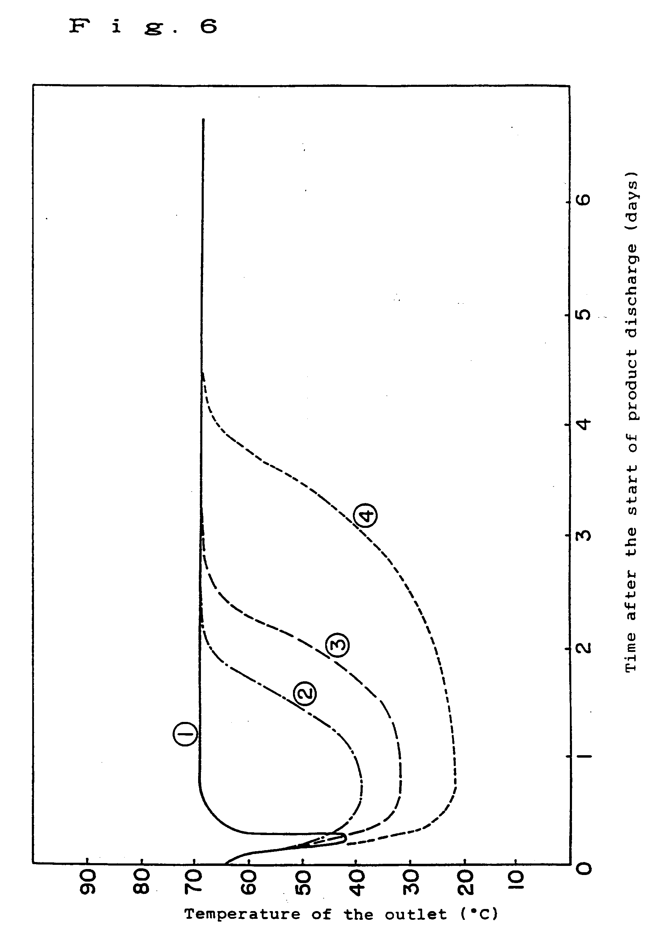

As apparent from Fig 6, according to this invention a part of the processed mixture discharged from the treating tank and further fermented is recycled so that a stable operation is obtained within a short time after the reaction starts. Therefore, composting can be accomplished within a short time and a compost of homogeneous and good quality can be produced.

In the present invention psychrophilic microorganisms and anaerobic microorganisms which cause a bad odor are extraordinarily decreased,and the treated mixture can be discharged without bad odor and outflow of sewage.

As a result of the above,the present invention can contribute greatly to the prevention of pollution and to the improvement of living environment.

The method of the present invention to manufacture composts using the device shown in the drawings is as described below.

First of all, livestock excrements, such as swine-, chicken-, or cattle-manures,sewage disposal sludge, such as living draining sludge or a mixture of said wastes with cellulose-containing organic materials such as grasses, hulls, straws, woodchips (preferably those having been used as livestock beds) are taken as raw materials 15, and the moisture content thereof is adjusted to 45 to 65%. The moisture-adjusted raw materials 15 are fed to the primary treatment tank 1 through the hopper 4.

The raw materials 15 are transported by the primary screw 7a of the screw conveyor 7, and finely crushed by the shearing/kneading system 8 on the way, where the shearing/kneading system, particularly the fixed blades 8b thereof, serve as baffle boards.

The raw materials transported by the primary screw 7a are sheared and kneaded while being compressed. Therefore the temperature is elevated quickly due to the heat of compression and the heat of friction. In this case, the intensity of the kneading friction, the quantity of the raw materials to be transported etc., can be controlled by adjusting the projection length of the fixed blades 8b. The temperature can further be elevated by increasing the internal pressure by applying the secondary screw 7b.

Thus, the temperature of the raw materials 15 in the primary treatment tank 1 is elevated by compression and kneading, and mechanical and thermal stimulations activate the microorganisms. Therefore, the fermentation is performed homogeneously and accelerated. Accordingly, the thermophilic microorganisms propagate because of the elevated temperature, and the number of psychrophilic microorganisms decrease. As as a result, a bad odor is repressed.

The adjustment of the open/close gate 3 regulates the discharge of the treated materials whereby internal pressure and temperature are adjusted. Thus, the materials treated in the primary treatment tank by means of compression and kneading are heated to 40 to 90°C and discharged through the open/close gate 3.

The high temperature materials discharged through the open/close gate 3 are transported into the secondary treatment tank 2. Since the treated materials are pulverized by high-speed rotary blades in the secondary treatment tank 2 while being contacted with air the treated materials are evenly exposed to oxygen. As a result, aerobic microorganisms are activated and grow rapidly and the fermentation is accelerated, by which a bad odor is further repressed because of the decrease of the number of anaerobic microorganisms.

According to this invention, a bad odor is scarce already in the discharging stage from the secondary treatment tank, and the working surrounding is greatly improved.

The treated mixture which is pulverized under blast is discharged from the outlet 10. The discharged processed mixture is ordinarily transmitted to the open fermentation box 17 and left to stand there for a few days.

Through this time, the processed mixture is fermented by thermophilic and aerobic microorganisms activated by the air penetrating through fine holes of the bottom plate 19.

A certain amount, for example the amount manufactured in one day, of the products is stocked in each fermentation box. Most of them, which are left to stand for a certain period, for example 5 days, are shipped as a product, a part of them is fed into the hopper 4b as the recycled raw materials, mixed with fresh raw material in the hopper 4, and supplied to the primary treatment tank 1.

In the following the invention is explained in more details by means of a working example and a comparative example.

### Comparative Example

1000 kg/day of sewage disposal sludge and 200 kg/day of hull as raw materials are used together with water, whereby the moisture content of the raw materials is adjusted to 50% and fed into the primary treating tank 1 from hopper 4 of the device shown in Fig.1. The operation of manufacturing the organic fertilizer is started: The temperature goes up by the heat of compression and the heat of friction. Aqueous ammonia is added as a pH conditioner to maintain a pH of 7 to 8 at a pressure of 19,6 N/cm² (2 kg/cm²) in the primary tank 1.

The product mixture treated in the primary treating tank at high temperature is discharged from open/close gate 3, released from the elevated pressure and transported to the secondary treating tank. Under the contact with air, the treated mixture is pulverized with high speed rotary blades. The pulverized treated mixture is discharged from outlet 10.

When operating under the condition of open air temperatures of 26°C, 17°C and 8°C, the changes in the outlet temperature are measured after the beginning of the discharge of the product. The results are shown in Fig. 6.

Fig.6, curve 2 shows the result with an air temperature of 26°C, curve 3 shows that with 17°C and curve 4 shows that with 8°C.

The outlet temperature once falls down after the starting of the product discharge. Thereafter it goes up and stabilizes at about 68°C. But it takes a long time to reach the stable state. Especially when the open air temperature is low, a longer time is required for the stabilization of the temperature.

### Example

A portion of the processed mixture discharged for one day in the comparative example is transported to a fermentation box 17 where further fermentation treatment takes place by maintaining the temperature at 60°C for 5 days. 200 kg/day of the fermentation-treated products in the fermentation box corresponding to 20 weight% of the total product is fed into the primary treatment tank 1 through hopper 4b, where it is mixed with fresh raw material fed from hopper 4a. The manufacturing of the organic fertizer is conducted similarly to the comparative example 1.

The recyling operation is carried out under the condition of an open air temperature of 8°C. The change in the outlet temperature of the beginnning of the product discharge is measured. The results are shown in Fig 6 (curve 1). Even though the air temperature is low, the outlet temperature stabilizes at 68°C after 8 hours. Thereafter the temperature remains almost constant.

## Claims

1. A method for manufacturing of organic fertilizers, with adjusting the moisture content of a waste containing organic materials or of a mixture of said waste with cellulose-containing organic materials to a range of 45 to 65 weight%, shearing and kneading the waste or the mixture in a primary treatment tank under an elevated pressure at a temperature elevated to 40 to 90°C by pressurization and friction, releasing the state of elevated pressure, followed by pulverizing the thus-treated mixture in a secondary treatment tank while contacting it with air, characterized by recycling a part of the processed mixture discharged from the secondary treatment tank and left in a fermentation box under the conditions of fermentation by thermophilic microorganisms at a temperature of higher than 40 °C for more than 5 hours after discharging, to the primary treatment tank and treating it there mixed with fresh raw materials, the recycled amount of processed mixture being 5 to 60 weight% of the total amount of the manufactured product.

2. Method according to claim 1, wherein the waste containing organic materials consists of livestock excrements, sewage sludge and/or a wet garbage.

3. Method according to claim 1 or claim 2, wherein there is added a pH adjusting agent to adjust the pH of said mixture to a range of pH of 6 to 9.

## Patentansprüche

1. Verfahren zur Herstellung von organischen Düngemitteln, in dem der Feuchtigkeitsgehalt eines organisches Material enthaltenden Abfalls oder eines Gemisches dieses Abfalls mit Cellulose enthaltendem organischen Material auf einen Bereich von 45 bis 65 Gew.-% eingestellt wird, scheren und kneten des Abfalls oder des Gemisches in einem ersten Behandlungsbehälter unter erhöhtem Druck bei einer durch Druck und Reibung auf 40 bis 90°C erhöhten Temperatur, Aufheben des erhöhten Druckzustandes, anschließendes Pulverisieren des so behandelten Gemisches in einem zweiten Behandlungsbehälter während es mit Luft in Kontakt gebracht wird, gekennzeichnet durch Rückführen eines Teiles des aus dem zweiten Behandlungsbehälter abgeführten behandelten Gemisches, das nach dem Abführen für mehr als 5 Stunden bei einer Temperatur von über 40°C unter Fermentationsbedingungen durch thermophile Mikroorganismen in einem Fermentationskasten verbleibt, zu dem ersten Behandlungsbehälter, wo es gemischt mit frischen Rohmaterialien behandelt wird, und der zurückgeführte Teil des behandelten Gemisches 5 bis 60 Gew.-% der Gesamtmenge des hergestellten Produktes beträgt.

2. Verfahren nach Anspruch 1, worin der organisches Material enthaltende Abfall aus Tierexkrementen, Klärschlamm und/oder nassen Küchenabfällen besteht.

3. Verfahren nach Anspruch 1 oder Anspruch 2, worin ein pH-Wert einstellendes Mittel zur Einstellung des pH-Werts des Gemisches auf 6 bis 9 zugegeben wird.

## Revendications

1. Procédé de préparation d'engrais organiques, en ajustant la teneur en humidité de déchets contenant des matières organiques, ou bien d'un mélange desdits déchets avec des matières organiques contenant de la cellulose entre 45 et 65% en poids, en hachant ou en cisaillant et en malaxant les déchets, ou bien ledit mélange, dans un réservoir de traitement primaire, sous une pression élevée à une température portée à 40 à 90°C par compression et frottement, en quittant l'état de pression élevée, en pulvérisant ensuite le mélange ainsi traité dans un réservoir de traitement secondaire tout en le mettant au contact de l'air, caractérisé en ce que l'on recycle une partie du mélange traité, déchargé du réservoir de traitement secondaire et laissé dans une boîte de fermentation sous des conditions de fermentation à l'aide de micro-organismes thermophiles à une température supérieure à 40°C pendant plus de 5 heures après le déchargement, vers le réservoir de traitement primaire et on la traite dans ce réservoir en mélange avec de la matière fraîche de départ, la quantité recyclée du mélange traité allant de 5 à 60% en poids de la quantité totale du produit préparé.

2. Procédé selon la revendication 1, dans lequel les déchets contenant des matières organiques consistent en des excréments d'élevage, des boues de curage ou de traitement des eaux usées et/ou des déchets humides.

3. Procédé selon la revendication 1 ou la revendication 2, dans lequel on additionne un agent permettant d'ajuster le pH dudit mélange dans un domaine allant de 6 à 9.
